# EUROPEAN PATENT APPLICATION

(11) **EP 2 940 086 A1**
(43) Date of publication of application: **04.11.2015**
(21) Application number: 14166796.4
(22) Date of filing: 01.05.2014
(51) Int. Cl.: C09D 11/02, C09D 11/10

(54) **Water-based printing ink composition**

(71) Applicant: Siegwerk Druckfarben AG & Co. KGaA, 53721 Siegburg (DE)
(72) Inventor: Branger, Christophe, 74330 La Balme de Sillingy (FR); Deporte, Claude, 74140 Saint Cergues (FR)
(74) Representative: Hepp Wenger Ryffel AG

(57) **Abstract**

The present invention is related to a water-based printing ink or overprint varnish composition, characterized in that the composition comprising at least one polyvinylacetate polymer component as binder component and not more than 5-wt.%, preferably 0.1 -3 wt.-% and most preferably no polyurethane component, based on the total amount of the composition. The present invention is furthermore related to a process of manufacturing said water-based ink or overprint varnish composition, to a laminate comprising a cured layer of said water-based ink or overprint varnish composition, and to an article comprising a cured layer of said water-based ink or overprint varnish composition.

## Description

The present invention is related to a water-based printing ink composition which is suitable for film lamination applications.

Laminates are multilayered shaped articles in which - according to the needs of the final article - each of the layers consists either of the same or of different materials. The preferred materials are paper, wood, textiles, metal and plastic films. In the field of food packaging, the laminates are mostly made from plastic or metal films, in particular metallized films, or a combination of both. Film materials are preferably chosen such that the laminates can be subjected to sterilization processes without deterioration of the film and/or the laminate. Printed pieces are laminated to protect them from stains, smudges, moisture, grease, tears and anything else that might shorten their service life. In addition to protection, print lamination adds strength and rigidity. As a further advantage, laminates impart to prints or generally images a satisfying appearance with respect to gloss and color fastness.

Generally laminates are produced by either joining two or more layers by means of adhesives or by adhesive-free extrusion coating. Irrespective of the production process a print or generally any kind of image which does not necessarily have to be printed can be applied to one or both of the layers prior to applying the next layer (Römpp Lexikon, Lacke und Druckfarben, ed. U.Zorll, Georg Thieme Verlag, Stuttgart, New York 1998, p.214 and 318).

Coating compositions for laminates, which are mainly in the form of printing inks, have to satisfy high standards. The resin as the film forming part (binder) of the composition must provide the dried layer with the required adhesive strength both to the underlying substrate and to the adhesive or to the extruded layer. As a further requirement, for some applications, the resin must impart to the dried layer stability during and after sterilization processes and/or treatment in boiling water even over a prolonged period of time (e.g. during food preparation). Further the dried layer must show blocking resistance and stability during sealing of the laminate (e.g. in the production of bags). The composition - as a printing ink - must be printable in flexographic and gravure printing processes which are the techniques commonly used for printing plastic films.

Polyurethane resins are one of the binders of choice in solvent-borne coating compositions (i.e. compositions comprising an organic solvent) for plastic films and in the production of image carrying laminates. However, for environmental reasons solvent-borne compositions are not preferred and are to be replaced by water-based compositions, in order to remove the content of volatile organic compounds (VOC) in the composition.

Water-based compositions on the basis of polyurethanes as binder, however, do not show satisfactory properties in the field of lamination printing. While an acceptable adhesive strength (expressed as bond strength value) can be obtained, the printability of such formulations needs improvement. Also, such compositions have been found to be unstable in viscosity, i.e. to have a too low viscosity, which makes them difficult to handle, in particular in flexographic printing, or to have increasing viscosity during printing, which is difficult to handle.

It was the problem of the present invention to provide an improved water-based printing ink composition, or an overprint varnish, which overcomes the above drawbacks and is suitable for film lamination applications.

According to the present invention, the above problem has been surprisingly solved by a water-based printing ink composition, or an overprint varnish, comprising at least one polyvinylacetate polymer component as binder component and not more than 5-wt.%, preferably 0.1 -3 wt.-% and most preferably no polyurethane component, based on the total amount of the composition. So far, it has been assumed that at least some substantial portion of the binder component of a water-based printing ink composition, or an overprint varnish, suitable for film lamination applications has to consist of polyurethane. With the present invention, it has been shown that this is not correct.

The composition of the present invention is a water-based composition. According to the present invention, *"water-based"* designates a composition which comprises water as the major solvent component. Organic solvents, e.g. alcohols, are only present in an amount of at most 49 wt.-%, preferably at most 10 wt.-%, and most preferably at most 5 wt.-% of the total solvent content of the entire composition.

According to the present invention, it has been found that a composition comprising at least one polyvinylacetate polymer component as a binder, but not containing any substantial amount of a polyurethane component, i.e. not more than 5-wt.% polyurethane, based on the total amount of the composition, is a suitable water-based printing ink composition, or an overprint varnish, for film lamination applications.

According to the present invention, the term "*polymer"* refers to a macromolecule composed of more than 20 repeating units, the so-called monomers. A polymer comprising one sort of monomer is called a homopolymer, whereas a polymer comprising at least two different sorts of monomers is called a copolymer.

According to the present invention, the term "acrylic polymer" refers to a polymer which is composed of at least one monomer comprising an acrylate moiety. Other monomers not comprising an acrylate moiety may additionally be present.

According to the present invention, the term "polyvinylacetate polymer" refers to a polymer which is composed of at least one monomer comprising a vinylacetate moiety. Other monomers not comprising a vinylacetate moiety may additionally be present.

According to the present invention, the term *"self-crosslinking polymer"* refers to a polymer which is capable of reacting with itself, under suitable conditions, resulting in a larger polymer. In order to be self-crosslinking, a polymer generally has to comprise two different reactive groups, or precursors of reactive groups, which under suitable conditions can react with each other.

According to the present invention, all percentages of a composition are understood as to sum up to 100%.

Polyvinyl acetates are known in the art. According to the present invention, it is preferred to use polyvinylacetate copolymers, wherein the copolymer is composed of vinylacetate and an alkylene as monomers. As alkylene, preferably a C₂₋₈ alkylene, for example ethylene, propylene, 1-butylene, 2-butylene, 1-pentene, 2-pentene, 1-hexene, 2-hexene, 3-hexene, 1-heptene, 2-heptene, 3-heptene, or 1-octene, or mixtures thereof may be used. Especially preferred is ethylene. Vinylacetate and the alkylene monomer are polymerized by a radical polymerisation mechanism under conditions known to the skilled man.

Instead of or in addition to an alkylene, also other monomers such as acrylates, unsaturated fatty acids or other vinylic monomers such as vinyl chloride or vinyl esters may be used.

According to a preferred embodiment of the present invention, said at least one polyvinylacetate is used in the form of an emulsion having a viscosity (Brookfield viscosity at 25°C, 4/20, ISO 2555) in the range of 2000 - 10.000 mPas, preferably 4000 - 7000 mPas. Preferably, said emulsion has a solids content (ISO 3251, 130°, 30 min) in the range of 50 -70 %, preferably 55 to 65%.

According to the present invention, a preferred polyvinylacetate is a copolymer of vinylacetate, ethylene and acrylic acid esters, preferably made from a monomer blend comprising a vinyl acetate content in the range between 60 and 95 wt.-%, and an ethylene content in the range between 5 and 40 wt.-%, of the total blend. Such a copolymer is commercially available from Celanese as an emulsion copolymer under the trade names Mowilith® or Vinamul®, or from Scott Bader under the trade name Texicote®.

In the composition of the present invention, one or more polyvinylacetate polymers may be present. Preferably, only one polyvinylacetate polymer is present. Preferably, the at least one polyvinylacetate polymer is provided in the extender part of the ink composition of the present invention.

According to the present invention, said polyvinylacetate polymer component is preferably present in an amount in the range from 10-50 wt.-%, preferably 20-40 wt.-%, based on the total composition. If more than one polyvinylacetate polymer component is used, the entire amount of polyvinylacetate polymer components in the composition of the present invention preferably lies in the range from 10-50 wt.-%, preferably 20-40 wt.-%, based on the total composition.

Acrylic polymers are known in the art and commercially available. According to the present invention, if at least one acrylic polymer is comprised in the composition, it is preferred to use a mixture of different acrylic polymers, in order to optimize the properties of the composition.

According to the present invention, it is preferred that, if present, the at least one acrylic polymer component in the composition is a self-crosslinking acrylic polymer. It has been found that the presence of a self-crosslinking acrylic polymer improves the printability of the composition.

Self-crosslinking acrylic polymers are known in the art. According to the present invention, water-based film-forming acrylic polymers are preferred. Particularly preferred are self-crosslinking acrylic emulsions having a viscosity (Brookfield viscosity at 25°C, 4/20, ISO 2555) in the range of 10 - 1000 mPas, preferably 100 - 500 mPas. Suitable self-crosslinking acrylic emulsions are commercially available from BASF under the trade name Joncryl® FLX, or from DSM under the trade name Neocryl® XK.

The term "*film forming"* is defined according to DIN 55945: 1996-09. Film forming is the generic term for the transition of a coating layer from the liquid to the solid state. Film forming occurs by means of physical drying and/or curing. Both processes may proceed simultaneously or one after the other. Whereas the term "drying" is more related to the process engineering used for drying a liquid layer, such as in ovens at elevated temperatures, the term "curing" is related to the chemical processes within the resin during the drying process.

If present, said self-crosslinking acrylic polymer is used in the ink composition, or an overprint varnish, of the present invention in an amount in the range from 5-30 wt.-%, preferably 10-20 wt.-%, based on the total composition. Preferably, the self-crosslinking acrylic polymer is provided in the extender part of the ink composition of the present invention.

According to a preferred embodiment of the present invention, the ink composition, or the overprint varnish, comprises additional acrylic polymers.

Preferably, the composition of the present invention comprises another acrylic emulsion, in addition to the above described self-crosslinking acrylic polymer. Said acrylic emulsion is not self-crosslinking. Preferably, said acrylic emulsion comprises an acrylic polymer having a glass transition temperature (DSC, DIN 51007) in the range from -30°C to +50°C, preferably -10°C and +20°C, and thus exhibiting low hardness, i.e. a soft polymer. More preferably, said acrylic emulsion has a viscosity (DIN 53019-1; Anton Paar Rheolab QC; MS: CC27; D=121 s⁻¹) in the range of 100 to 1000 mPas, preferably 200 to 800 mPas. Said not self-crosslinking acrylic emulsion improves the adhesion of the ink composition, or the overprint varnish, of the present invention.

Suitable not self-crosslinking acrylic emulsions are known in the art and commercially available. According to the present invention, acrylic emulsions made from acrylates and styrene as co-monomers are preferred. A suitable polymer is commercially available from Indulor under the trade name Induprint SE 245. If present, said not self-crosslinking acrylic emulsion is used in the ink composition, or the overprint varnish, of the present invention in an amount in the range from 1-20 wt.-%, preferably 5-10 wt.-%, based on the total composition. Preferably, said polymer is provided in the extender part of the ink composition.

Preferably, the composition of the present invention furthermore comprises at least one acrylic resin solution. Typically, acrylic resin solutions are based on ionic, preferably anionic polymers which are provided in water in neutralized form. As neutralizing agent, compounds such as ammonia (NH₃) or MEA (monoethanolamine) may be used. More preferably, said acrylic resin solution has a viscosity (DIN 53019-1; Anton Paar Rheolab QC; MS: CC27; D=28,9 s⁻¹) in the range of 100 to 1000 mPas.

According to a preferred embodiment of the present invention, a combination of two different acrylic resin solutions is used, wherein one acrylic resin solution has a viscosity (DIN 53019-1; Anton Paar Rheolab QC; MS: CC27; D=28,9 s⁻¹) in the range of 100 to 800 mPas, preferably 200 to 600 mPas, and the other acrylic resin solution has a viscosity (DIN 53019-1; Anton Paar Rheolab QC; MS: CC27; D=28,9 s⁻¹) in the range of 500 to 1000 mPas, preferably 600 to 1000 mPas.

Acrylic resin solutions are known to the skilled man and commercially available. Acrylic resin solutions suitable for the present invention are commercially available from Indulor under the trade name Indunal. Exemplary products are Indunal S 2230 HPL and Indunal S 1134 MPHL.

If present, said at least one acrylic resin solution is used in the ink composition, or the overprint varnish, of the present invention in an amount in the range from 1-20 wt.-%, preferably 5-15 wt.-%, based on the total composition. Preferably, said at least one acrylic resin solution is provided in the ink base part of the ink composition. If more than one acrylic resin solution is used, the entire amount of acrylic resin solutions in the composition of the present invention preferably lies in the range from 1-20 wt.-%, preferably 5-15 wt.-%, based on the total composition.

According to the present invention, if an acrylic polymer component is used, preferably the entire amount of acrylic polymer component is present in an amount in the range from 10-50 wt.-%, preferably 20-40 wt.-%, based on the total ink composition, or the overprint varnish.

According to a preferred embodiment of the present invention, the ink composition, or the overprint varnish, comprises a combination of a polyvinylacetate polymer, a self-crosslinking acrylic polymer, an acrylic emulsion which is not self-crosslinking, and at least one acrylic resin solution.

Especially preferred, the ink composition, or the overprint varnish, comprises a combination of
- a polyvinylacetate which is a copolymer of vinylacetate, ethylene and acrylic acid, in an amount in the range from 10-50 wt.-%, preferably 20-40 wt.-%, based on the total composition;
- a self-crosslinking acrylic emulsion in an amount in the range from 5-30 wt.-%, preferably 10-20 wt.-%, based on the total composition,
- a not self-crosslinking acrylic emulsion in an amount in the range from 1-20 wt.-%, preferably 5-10 wt.-%, based on the total composition, and
- two different acrylic resin solutions in a total amount in the range from 1-20 wt.-%, preferably 5-15 wt.-%, based on the total composition.

The ink composition, or the overprint varnish, of the present invention is water-based. It comprises water as solvent in an amount of preferably 5 - 30 wt.-%, more preferably 5 to 20 wt.-%, based on the total composition.

In addition to the above described binder, the ink composition of the present invention preferably comprises at least one pigment. Pigments for water-based ink compositions in the field of lamination printing are known in the art and commercially available. Preferably, said at least one pigment is used in the ink composition of the present invention in an amount in the range from 0-20 wt.-%, preferably 5-15 wt.-%, based on the total composition.

The ink composition, or the overprint varnish, of the present invention may furthermore comprise additives which are conventionally used in water-based compositions, such as water-based inks, especially lamination printing inks. For example, the ink composition, or the overprint varnish, of the present invention may comprise at least one antifoaming agent, at least one biocide, at least one neutralizing agent, at least one wetting agent, at least one retarding agent, and at least one agent for decreasing the surface tension. Those additives are known to a skilled person and commercially available. If present, any of those additives in the ink composition, or the overprint varnish, of the present invention in an amount in the range from 0,01-10 wt.-%, preferably 0,05-5 wt.-%, based on the total composition.

The ink composition, or the overprint varnish, of the present invention can be prepared by adding together the individual components and mixing them under suitable conditions, e.g. stirring.

Thus, the present invention is also related to a process for manufacturing a water-based printing ink composition, or an overprint varnish, as described above, comprising the step of adding together the components of said composition, wherein one component is at least one polyvinylacetate polymer component.

Preferably, the pigment, if present, is provided in a portion of the entire composition which is called "ink base". Said ink base preferably comprises, in addition to the at least one pigment, at least one acrylic resin solution as binder, as described above, water as a solvent and optional additives, such as an antifoaming agent, a biocide or a neutralizing agent. Thus, the pigment is provided in form of a dispersion in the binder. Dispersion of the pigment in the binder can be carried out, for example, by milling methods (grinding step). Examples are ball mill, sand mill, horizontal media mill, high-shear fluid flow mill, a three-roll mill, or the like.

Preferably, said ink base comprises one or more pigments in an amount of 30 to 60 wt.-%, preferably 40 to 50 wt.-%, based on the total amount of the ink base, said one or more acrylic resin solutions (binder) in an amount of 10 to 40 wt.-%, preferably 20 to 30 wt.-%, based on the total amount of the ink base, water in an amount of 10 to 40 wt.-%, preferably 20 to 30 wt.-%, based on the total amount of the ink base, and optional additives each in an amount in the range from 0,01-10 wt.-%, preferably 0,05-5 wt.-%, based on the total amount of the ink base.

After the optional grinding step has been completed, said ink base is combined with the so called extender part of the ink composition of the present invention, which is sometimes also referred to a technical varnish, and blended under suitable conditions.

Preferably, said extender part comprises one or more acrylic polymer components in an amount of 20 to 50 wt.-%, preferably 30 to 45 wt.-%, based on the total amount of the extender part, one or more polyvinylacetate polymers in an amount of 30 to 60 wt.-%, preferably 40 to 50 wt.-%, based on the total amount of the extender part, water in an amount of 5 to 30 wt.-%, preferably 5 to 20 wt.-%, based on the total amount of the extender part, and optional additives each in an amount in the range from 0,01-10 wt.-%, preferably 0,05-5 wt.-%, based on the total amount of the extender part.

Thus, according to a preferred embodiment of the present invention, a pigment is provided in an ink base comprising at least one acrylic polymer component, and is subsequently mixed with an extender part comprising at least one acrylic polymer component and at least one polyvinylacetate polymer component.

According to the present invention, the ink base and the extender part are preferably blended with each other in a ratio of ink base to extender from 30:70 to 50:50.

The printing inks of the present invention may thus be prepared like conventional printing inks, respectively, by mixing the individual components with each other under appropriate conditions.

The overprint varnishes of the present invention may be prepared like conventional overprint varnishes, respectively, by mixing the individual components with each other under appropriate conditions. In the case of an overprint varnish, no colorant is added.

The ink composition, or the overprint varnish, of the present invention is especially suitable in the field of lamination printing. Thus, the present invention is also related to a laminate, comprising a cured layer of a water-based ink composition, or overprint varnish, as described above on at least one surface of one of the layers of the laminate.

The present invention further encompasses a method of producing a laminate, said method comprising the step of
a) providing a printing ink composition, or an overprint varnish, according to the present invention,
b) applying a layer to a first substrate by printing said printing ink composition, or said overprint varnish, provided in step (a) in a flexographic and/or gravure printing process to said first substrate
c) drying and/or curing the layer
d) applying an adhesive to the layer of step (c) and finishing the laminate by applying a second substrate on the adhesive.

The application of the ink composition of the present invention onto a substrate, preferably one layer of a laminate, is preferably carried out by a flexographic or gravure printing process.

The gravure printing process and the flexographic printing process are known to the skilled man and need not be described here in detail. The application of the overprint varnish on the substrate is preferably carried out by a conventional coating process commonly used for applying varnishes onto a substrate

The present invention is furthermore related to the use of an overprint varnish according to the present invention for applying a varnish layer onto a substrate.

The substrate may be selected from a wide range of substrates commonly provided with ink or varnish layers. According to the present invention, the substrate may be selected from polymer substrates such as polyethylene or polypropylene or polyethylene terephthalate polymers, or may be a paper substrate. Preferably, the first and the second substrates are of a plastic material, preferably of polyolefinic nature. The first and the second substrate can also be of different chemical nature like polyester or polyamide such as Nylon.

According to the present invention, as an adhesive in this process can be used any conventional solvent-free adhesive or solvent-based adhesive.

The adhesives are applied to the layer according to conventional methods, for example by using a hand coater, a roller of knife-coating. Alcohol-based adhesives are preferably diluted with a conventional diluent before application. Preferably, a solution containing 20 % by weight to 80 by weight, more preferably 30 by weight to 60 by weight of the adhesive is prepared hereby.

In the case of those adhesives, it is preferred according to the present invention to apply said adhesive to the printed layer of a substrate, and then to finish the laminate by applying a second substrate on the adhesive. In the case of a solvent-free adhesive, however, it is more preferred to apply said adhesive to an unprinted layer of a substrate, and then to finish the laminate by applying the printed layer of a second substrate to the adhesive.

Further part of the present invention is therefore a laminate produced by the method mentioned hereinbefore. Of course, the laminate can also be produced by extruding the second substrate on the first substrate carrying the dried layer. This method does not call for an adhesive.

Laminates obtainable with the ink composition of the present invention are suitable for a wide range of applications. In particular, they are suitable for all rigid and flexible packaging and labels in areas like food packaging (e.g., retortable bags, frozen food packaging, refrigerated food packaging, shelf stable food packaging, dry goods packaging, liquid food packaging, fast food wrappers and bags), pharmaceutical packaging (e.g., primary packaging, secondary packaging, booklets and instructions), personal hygiene packaging (e.g., soap packaging, hair care packaging, baby care packaging, feminine care packaging, male care packaging), home care packaging (e.g., detergent packaging, cleaner packaging), agricultural packaging (e.g., herbicide packaging, pest control packaging, fertilizer bags), industrial packaging (e.g., shopping bags, construction wrappers and bags), and pet care packaging (e.g., pet food bags, pet medical packaging, pet hygiene packaging). Such packagings and labels are known in the art and need not be discussed in detail here.

Thus, the present invention is furthermore related to an article, in particular a rigid and flexible packaging or a label, comprising a cured layer from a water-based ink composition, or an overprint varnish, of the present invention or a laminate as described above, i.e. a laminate comprising a cured layer of a water-based ink composition, or an overprint varnish, as described above on at least one surface of one of the layers of the laminate.

The present invention is furthermore related to a process for preparing an article, in particular a rigid and flexible packaging or a label, comprising the steps of applying a water-based ink composition, or an overprint varnish, as described above onto said article and curing said printing ink or said overprint varnish, or applying a laminate as described above, i.e. a laminate comprising a cured layer of a water-based ink composition, or an overprint varnish, as described above on at least one surface of one of the layers of the laminate, onto said article.

If the water-based ink composition, or the overprint varnish, of the present invention is applied directly on the article, this is preferably also achieved by a flexographic or gravure printing process.

The process of applying a laminate onto an article, e.g. by means of an adhesive layer or by a stretch-sleeve or shrink-sleeve process, is known to a skilled man.

The present invention will now be further explained by means of non-limiting examples.

### Example 1

An ink composition according to the present invention was manufactured as follows:
The components of the ink base according to table 1 below were mixed with each other in a conventional manner. Subsequently, pigment grinding was performed using a media mill. After grinding, the extender part, which had been previously prepared by mixing the components of the extender according to table 1 below in a conventional manner, was added and the ink composition finalized by mixing all components with each other in a conventional manner.

**Table 1**

| | **Example 1** | wt.-% |
|---|---|---|
| Extender | | |
| | MOWILITH LDM 1365 (PVA) | 27,00 |
| | INDUPRINT SE 245 (soft acrylic emulsion) | 6,00 |
| | JONCRYL FLX 5025 (SELF CROSSLINKED ACRYLIC EMULSION) | 16,80 |
| | Water | 6,11 |
| | Additives | 4,09 |
| Ink base | INDUNAL S 1134 MPHL (Acrylic solution resin in MEA) | 6,00 |
| | INDUNAL S 2230 HPL (Acrylic solution resin in Ammonia) | 4,80 |
| | HELIOGEN BLUE D 7088 (IRGALITE BLUE GLO) (Colorant) | 15,04 |
| | CP BLUE 153234 (Colorant) | 3,96 |
| | Water | 9,92 |
| | Additives | 0,28 |

### Example 2 (Comparative)

A conventional polyurethane-containing ink composition was manufactured as described above in example 1.

| | **Example 2 (comparative)** | wt.-% |
|---|---|---|
| Extender | NEOREZ R-650 (SB-80E)(PU EMULSION) | 36,54 |
| | DAOTAN VTW 6421/42WA (PU SOLUTION) | 15,20 |
| | NEOCRYL A1120 (soft acrylic emulsion) | 3,19 |
| | Water | 0,86 |
| | Additives | 4,20 |
| Ink base | JONCRYL HPD 296 (Soft acylic solution resin in Ammonia) | 9,60 |
| | HELIOGEN BLUE D 7088 (IRGALITE BLUE GLO) (Pigment) | 15,00 |
| | SUNFAST BLUE 15:3 2493405 (Pigment) | 5,00 |
| | Water | 10,24 |
| | Additives | 0,16 |

### Experimental results

### a) Bond strength value

Bond-strength is the force per unit area required to separate two adjacent layers of a package. Bond strength value was tested using a dynamometer (Type Lhomargy).

A printed sample was prepared by putting the composition according to example 1 or comparative example 2 onto a substrate (polypropylene), using a hand coater (simulation of flexo printing, HC1 (yellow), wet deposit thickness = 6µm) and drying the applied layer. A counter-substrate (Polyethylene) was provided with a layer of an adhesive (Coim SF723/CA326) using a hand coater (simulation of flexo printing, HC1 (yellow), wet deposit thickness = 6µm) and subsequently dried. The printed substrate was applied onto the adhesive layer, and the substrate were pressed against each other using rollers, thus forming a laminate.

The laminated printed sample was stored for 7 days at 25 °c to allow adhesive curing before bond strength value (BSV) evaluation

A sample(width = 15 mm)was cut out of the laminate composition and was placed between two jaws. The sample was drawn out and the substrate was separated from the counter-substrate. At a speed of 200mm/min, the bond strength value was determined, and the delamination aspect was observed.

The test result was classified according to the following score:
0: Delamination occurred at an applied force of 0-0.5 N
1: Delamination occurred at an applied force of 0.5-1 N
2: Delamination occurred at an applied force of 1-2 N
3: Delamination occurred at an applied force of 2-3 N
4: No delamination, but breaking of substrate occurred The test gave the following results:

| | **Example 1** | **Example 2 (comparative)** |
|---|---|---|
| Bond strength value | 4 | 3 |

### b) Printability

In said test, evaluation of the risk of clogging frame with an ink or varnish and determination of the ability of an ink to re-dissolve after stopping the machine, was performed.

A textured cylinder was placed over a pan. The compositions according to example 1 and comparative example 2 were diluted until reaching a viscosity of 25 seconds (Cup AFNOR 4, 23°C). A drop of each composition was placed on the cylinder.. The compositions were spread with a piece of cardboard or plastic as a blade. The compositions were allowed to dry for about 2 minutes. Then, a fresh drop of each composition was placed onto the respective dried layer, corresponding to an anilox roller, and rubbed with a gloved finger, describing small circles on the spot. Using a spray bottle, a jet of water was put on the drop rubbed on the anilox roller to rinse the excess product. The facility of the water to remove the composition from the treated position was assessed as re-dissolution capability of the respective composition. The test was optionally repeated after a respective drying period, e.g. after 5 minutes or more (time can be more than one hour), until a difference between the compositions according to examples 1 and 2 could be observed.

Subsequently, a cloth dampened with water was taken for rubbing on the anilox roller at a location other than where the ink drop was rubbed, to evaluate the ability of cleaning water.

The tests were evaluated by visual assessment according to the following score:
0 = The ink film has the same appearance as before friction: The product remains completely in the cells; the stripping is bad
5 = The ink film is completely gone, the anilox roller is clean; the product was completely dissolved: the stripping is good

Notes 1-4 are given as intermediate notes between the extremes 0 and 5.

The test gave the following results:

| | **Example 1** | **Example 2 (comparative)** |
|---|---|---|
| Printability | 4 | 2 |

## Claims

1. Water-based printing ink or overprint varnish composition, **characterized in that** the composition comprising at least one polyvinylacetate polymer component as binder component and not more than 5-wt.%, preferably 0.1 -3 wt.-% and most preferably no polyurethane component, based on the total amount of the composition.

2. Water-based printing ink or overprint varnish composition according to claim 1, **characterized in that** said composition comprises at least one acrylic polymer component and at least one polyvinylacetate polymer component.

3. Water-based printing ink or overprint varnish composition according to claim 1 or 2, **characterized in that** said polyvinylacetate polymer component is a copolymer of vinylacetate, ethylene and acrylic acid ester.

4. Water-based printing ink or overprint varnish composition according to any one of claims 2 to 3, **characterized in that** said composition comprises a mixture of different acrylic polymers.

5. Water-based printing ink or overprint varnish composition according to claim 4, **characterized in that** said mixture of different acrylic polymers comprises a self-crosslinking acrylic polymer, preferably a self-crosslinking acrylic emulsion.

6. Water-based printing ink or overprint varnish composition according to according to claim 4 or 5, **characterized in that** said composition comprises an acrylic emulsion which is not self-crosslinking.

7. Water-based printing ink or overprint varnish composition according to according to any one of claims 4 to 6, **characterized in that** said composition comprises at least one acrylic resin solution.

8. Water-based printing ink or overprint varnish composition according to any one of claims 2 to 7, **characterized in that** said composition comprises a combination of a polyvinylacetate polymer, a self-crosslinking acrylic polymer, an acrylic emulsion which is not self-crosslinking, and at least one acrylic resin solution.

9. Water-based printing ink or overprint varnish composition according to any one of claims 1 to 8, **characterized in that** said polyvinylacetate polymer component is present in an amount in the range from 10-50 wt.-%, preferably 20-40 wt.-%, based on the total ink composition.

10. Water-based printing ink or overprint varnish composition according to any one of claims 2 to 9, **characterized in that** said at least acrylic polymer component is present in an amount in the range from 10-50 wt.-%, preferably 20-40 wt.-%, based on the total ink composition.

11. Process for manufacturing a Water-based printing ink or overprint varnish composition according to any one of claims 1 to 10, comprising the step of adding together the components of said composition, wherein one component is at least one polyvinylacetate polymer component.

12. Process according to claim 11, **characterized in that** a pigment is provided in an ink base comprising at least one acrylic polymer component, and is subsequently mixed with an extender part comprising at least one acrylic polymer component and at least one polyvinylacetate polymer component.

13. Use of a water-based printing ink or overprint varnish composition according to any one of claims 1 to 10 in the field of film lamination.

14. Laminate, comprising a cured layer of a water-based printing ink or overprint varnish composition according to any one of claims 1 to 10 on at least one surface of one of the layers of the laminate.

15. Article, in particular a rigid and flexible packaging or a label, comprising a cured layer from a water-based printing ink or overprint varnish composition according to any one of claims 1 to 10 or a laminate according to claim 14.
